# EUROPEAN PATENT APPLICATION

(11) **EP 0 778 658 A1**
(43) Date of publication of application: **11.06.1997**
(21) Application number: 95420351.9
(22) Date of filing: 05.12.1995
(51) Int. Cl.: H02K 49/10, F04D 13/02

(54) **Detector for asynchronous movement in a magnetic coupling**

(71) Applicant: UGIMAG S.A., F-38830 Saint-Pierre-d'Allevard (FR)
(72) Inventor: Martinek, Gerhard, CH-5254 Boezen (CH)
(74) Representative: Mougeot, Jean-Claude

(57) **Abstract**

The detector for asynchronous movement in magnetic couplings, aimed at detecting the relative movement of its two rotating coupling parts (2,3), is characterised in that said detector comprises:,
a) wirings A (7), located on one (2) of the rotating parts (2,3) so as to produce an electomotive force in case of relative movement of said coupling parts (2,3),
b) wirings B (8), forming a closed circuit (70) with said wirings A (7), located around the shaft (20) of said one (2) of the rotating parts (2,3),
c) means to transmit a signal from wirings B (8), due to said electromotive force and corresponding current variations, to the not-moving surroundings, without any physical or electrical contact between rotating wirings B and said not-moving surroundings, in order to further detect said signal with the help of known means.

## Description

### FIELD OF THE INVENTION

The invention relates to a detector for an asynchronous movement in a magnetic coupling. Magnetic coupling or «drives» are devices in which magnets are used to move another body without physical contact.

### PRIOR ART

Magnetic couplings are mainly used :
a) to drive pumps, agitators, etc... in hermetically sealed devices without any need for seals and therefore no risk of leakage. Examples are pumps for chemicals, autoclaves, etc...
b) to limit a transmitted force or torque. If the limit is exceeded, no further force or torque is transmitted, protecting mechanical parts from breaking, too high screwing, etc... A typical application is to close the screw cap of bottles or jars with a well-defined torque in automatic filling/packaging machines.
Magnetic couplings consists of two moving parts containing permanent magnets or magnets and suitably shaped iron parts (synchronous couplings), or a configuration of permanent magnets with a magnetically less hard material (hysterisis couplings), or magnets and electrically conducting material (eddy current couplings).
Many different configurations are in use, for exemple concentric rings with alternating magnetic poles (coaxial couplings), discs with alternating poles facing each other (face or butt-end couplings) or similar configurations for linear movement.

There are different ways to detect the movement of the coupling parts and finally deduce if the coupling is in synchronous movement. A discrimination can be made by considering the fundamental distinction between moving sensors and sensors at fixed position in the device.
Fixed sensors have the advantage of the direct availability of the signal without the need for transmitting it from a moving source to the «outside» of the device. The disadvantage is that a signal is always produced, both for synchronous and asynchronous movement. Therefore, the signal has to be analysed, for example by detecting the speeds of both rotating parts and determining the difference, or by detecting the speed of the inner part and comparing it to a given value, or by mesuring a mixed signal from both parts and analyzing for the different contributions. All these methods involve a complex analysis of the signal and / or a knowledge of the operating conditions (e.g. a fixed speed) of the coupling.

Moving sensors have the advantage that a signal can show directly the difference in movements of the parts, without elaborate analysis or additionnal information. The problem is then to transmit the signal from the moving sensor to the environnement (the «outside» of the device). The common way to do this would be to use sliding contacts or brushes, with the following disadvantages:
* wear at the contact surfaces, which implies that periodic servicing is needed,
* possible contact problems, which could lead to a low reliability.

### PROBLEM POSED

On the one hand, in many applications, it is desirable to detect if the coupling parts are moving synchronously or if there is any relative movement or slipping between the parts.
In particular, it is very important to detect if one of the coupling parts is at rest.
Prolonged slipping often leads to damage to the device by heating or mechanical vibrations, etc...
On the other hand, in many applications, reliability and absence of wear are the primary motives to use magnetic couplings instead of seals, so that the disadvantages associated with prior art moving sensors are in most cases intolerable for a sensor.

The aim of the present invention is to create an electrical signal that indicates relative movement between the couplings parts and may be used to control the operation of the device. But the present invention aims at a detector, needing neither a complex analysis of the signal as in fixed sensors, nor sliding contacts as in moving sensors.

### GENERAL DESCRIPTION OF THE INVENTION

According to the invention, the detector for asynchronous movement in magnetic couplings, aimed at detecting the relative movement of its two rotating coupling parts , is characterised in that said detector comprises:
a) wirings A, located on one of the rotating parts so as to produce an electromotive force in case of relative movement of said coupling parts,
b) wirings B, forming a closed circuit with said wirings A, located around the shaft of said one of the rotating parts,
c) means to transmit a signal from wirings B, due to said electromotive force and corresponding current variations, to the not-moving surroundings, without any physical or electrical contact between rotating wirings B and said not-moving surroundings, in order to further detect said signal with the help of known means.

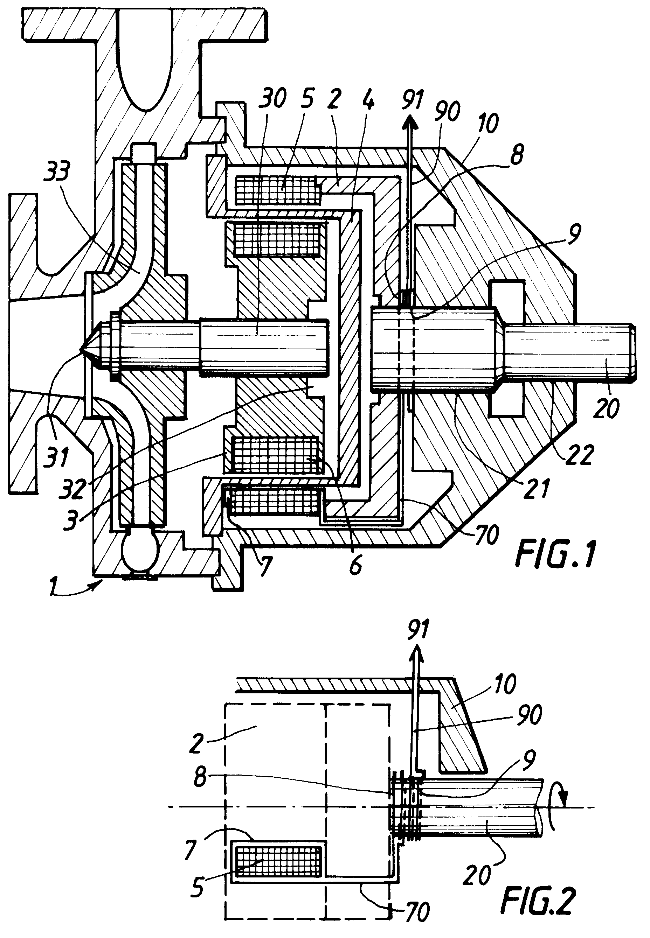

Preferably, said means to transmit a signal is wirings C, facing and located, around said shaft, close to wirings B, so as to create in wirings C an electric signal due to said corresponding current variations.
Preferably, saif shaft is made of magnetic material, typically steel.
Thus, said electric signal is provided by a combination of three coils or windings which are used to create and then transmit to the not-moving surroundings an alternating voltage when the coupling parts do not run synchronously. The present invention will be best understood with consideration of figure 1.

### DESCRIPTION OF THE FIGURES

Figure 1 is an axial section of a centrifugal pump (1) driven by a coaxial permanent magnet couplings. The pump (1) itself comprises:
   * a peripheral driver (2), fixed to the shaft (20) of a motor (not shown), provided with permanent magnets (5),
   * a central rotor (3), fixed to the steel (or any other magnetic material) shaft (20) of a motor provided with permanent magnets (6), forming a magnetic coupling with magnets (5),
   * the driver (2) and the rotor (3) being separated by an interstitial sealing shell (4),
   The stability and centring of the shafts (20,30) is ensured by bearings (21,22,31,32) fixed to the flame (10) of the pump or to said sealing shell (4).
   The detector according to the invention comprises:
   * a sensing coil A (7), fixed on one of the perment magnets (5), comprising windings,
   * a second coil B (8), forming a closed circuit (70) with said sensing coil A (7), is fixed around the shaft (20) and rotates along with the peripheral driver (2),
   * a third coil C (9) is located close to said coil B (8), but is fixed to the flame (10) of the pump (1), said coil C forming a closed circuit (90) with a measuring apparatus (91) (not shown on figure 1).
Figure 2 is a detailed diagrammatic view of the detector according to the invention, showing in detail the three coils A (7), B (8) and C (9) :
   * the coil (7) surrounds the magnet (5), so as produce an electromotive force in said coil (7) every time the magnet (5) slips in front of one of the coupling magnets (6).
   * said electromotive force induces some current in the coil (8) on the shaft (20), thanks to the closed circuit (70),
   * and in turn, the variations of said current, correlated with each passage of the coil (7) in front of one of the coupling magnets (6), induce an electric signal in coil (9), which can be detected by a measuring apparatus (91), typically an AC voltmeter.

### DETAILED DESCRIPTION OF THE INVENTION

Preferably, said wirings A (7) are located around at least one magnet (5) of said one of the rotating parts. Therefore, given that magnets (6,7) of the two rotating parts (2,3) are located in front of each other, the magnetic flux of the magnets (6) of one rotating part (3) is necessarily picked up by said wirings A (7) located around a magnet (5) of the other rotating part (2).

According to the invention, said electric signal in wrings C (9) is detected by any known measuring apparatus (91), typically an AC voltmeter.

The number of windings of wirings A,B,C, the section of the windings, the section of the conductive wire forming said wirings A, B, C, are chosen by the man of the art, in relation with said measuring apparatus (91), so as to give an unambiguous signal detection.
The number of windings and cross section of the used wire can be varied over a wide range, enabling the user to choose the strength of the signal. The electromotive force in closed circuit (70) of windings (or coils) A and B is proportionnal to the number of windings A, and to the time derivative of the flux of magnets (6) through the coils A (7).
The current I in the closed circuit (70) of coils A and B depends on the length of the closed circuit and the cross section of the copper wire. If a given volume around a magnet (7) is filed with a copper wire, it does not make much of a difference if one uses many turns of wire with a low cross section or one turn made of solid copper. Therefore, the man of the art can obtain a signal as strong as necessary, by choosing a large cross-section wire, and/or increasing the number of turns, or the number of poles (magnets (7) that can be surrounded by coils A).
As for coil C (9), more windings will again produce more voltage at the cost of higher resistance. The choice depends on how much signal is wanted and if any power is to be drawn from it. But the most important consideration for coil C (9) is to make sure that the magnetic flux generated by current variations in coil B (8) goes trough it: coil C (9) is put as close as possible to B, but without any contact between the rotating coil B and not moving coil C.
Therefore, it is possible within the range of the invention not to use very expensive and highly sensitive voltmeters, but to use ordinary and cheap voltmeters.

### EXAMPLE

A detector according to the present invention has been mounted on a magnetic pump, as illustrated in figures 1 and 2, to detect the slipping of magnets (5,6).
All the coils were made with copper wire of diameter 0,71 mm.

Further details are given with the detailed desciption of the Figures 1 and 2.

### ADVANTAGES OF THE INVENTION

The invention described here uses the advantages of moving sensors and, by a contactless transmission of the signal, avoids its known disadvantages. No expensive and easily damaged parts (like Hall-sensors or mechanical components) are used, the whole sensing system consisting of coils of wire only.
The result is a sensor having the following advantages:
* an unambiguous signal, that can be used without any elaborate processing,
* a very high reliability,
* a low cost.

### USE OF THE INVENTION

The detector according to the present invention can be used in any equipements having magnetic couplings typically to drive pumps, agitators, etc... or to limit a transmitted force or torque.
The detector according to the present invention can be used either to detect any relative movement between coupling parts, and/or to control said equipements so as to prevent further slipping between said magnetic couplings.

## Claims

1. Detector for asynchronous movement in magnetic couplings, aimed at detecting the relative movement of its two rotating coupling parts (2,3), characterised in that said detector comprises:,
a) wirings A (7), located on one (2) of the rotating parts (2,3) so as to produce an electromotive force in case of relative movement of said coupling parts (2,3),
b) wirings B (8), forming a closed circuit (70) with said wirings A (7), located around the shaft (20) of said one (2) of the rotating parts (2,3),
c) means to transmit a signal from wirings B (8), due to said electromotive force and corresponding current variations, to the not-moving surroundings, without any physical or electrical contact between rotating wirings B and said not-moving surroundings, in order to further detect said signal with the help of known means.

2. Detector according to claim 1 wherein said wirings A (7) are located around at least one magnet (5) of said one (2) of the rotating parts (2,3).

3. Detector according to any claim 1 to 2 wherein said means to transmit a signal is not-moving wirings C (9), facing and located close to wirings B (8), so as to create in wirings C (9) an electric signal due to any variation of said electric voltage.

4. Detector according to claim 3 where said electric signal in wirings C (9) is detected by any known measuring apparatus (91), typically an AC voltmeter.

5. Detector according to any one of claims 1 to 4 wherein the number of turns of wirings or coils A,B,C, the section of the coils, the section of the conductive wire forming said wirings A, B, C, are chosen in relation with said measuring apparatus (91), so as to give an unambiguous signal.

6. Use of detector according any one of claims 1 to 5 in any equipements having magnetic couplings typically to drive pumps, agitators, etc... or to limit a transmitted force or torque.
